# EUROPÄISCHE PATENTSCHRIFT

(11) **EP 3 398 868 B1**
(45) Veröffentlichungstag und Bekanntmachung des Hinweises auf die Patenterteilung: **25.03.2020**
(21) Anmeldenummer: 18170720.9
(22) Anmeldetag: 03.05.2018
(51) Int. Cl.: B65D 1/26, B65D 85/804, B29C 51/08

(54) **BECHER BZW. KAPSEL**
CUP OR CAPSULE
GOBELET OU CAPSULE

(30) Priorität: 04.05.2017 DE 102017109632
(43) Veröffentlichungstag der Anmeldung: 07.11.2018
(73) Patentinhaber: PACCOR Packaging GmbH, 40468 Düsseldorf (DE)
(72) Erfinder: Bergner, Dieter, 74676 Niedernhall (DE)
(74) Vertreter: Tilmann, Max Wilhelm

(56) Entgegenhaltungen:
- EP-A1- 0 694 478
- FR-A1- 2 216 081
- US-A1- 2010 064 899

## Beschreibung

Die Erfindung bezieht sich auf einen aus einer Kunststofffolie oder einem -zuschnitt tiefgezogenen Becher bzw. eine Kapsel mit einem Boden und einer umlaufenden Wand.

Derartige Becher bzw. Kapseln werden oftmals in Kaffeemaschinen eingesetzt. Diese werden bislang entweder im Spritzgußverfahren oder aus hinsichtlich Umweltverträglichkeit bedenklichen Materialien, wie zum Beispiel Polystyrol **(PS)** hergestellt, um eine ausreichende Stabilität und Funktionalität zu gewährleisten.

Bisherige Versuche, derartige Becher bzw. Kapseln aus gut recycelbaren Materialien im Tiefziehverfahren herzustellen, scheiterten daran, daß die Kapseln insbesondere beim Durchstoßen des Bodens und beim Brühen nicht formstabil waren.

Die EP 0 694 478 A1 lehrt, bei einem becherförmigen Behälter, der im Tiefziehverfahren aus einer Flachfolie mit einem nicht runden Querschnitt hergestellt ist, und einen Boden und davon aufsteigende Seitenwände aufweist, wobei der Übergang zwischen dem Boden und den Seitenwänden bogenförmig ausgebildet ist, dafür Sorge zu tragen, dass eine gleichmäßige Materialverteilung erreicht wird und damit Dünnstellen wirksam vermieden werden.

Die FR 2 216 081 beschreibt ein Herstellungsverfahren für eine Kapsel.

Die US 2010/0064899 A1 zeigt in den Figuren 18 und 19 Ausführungsformen, bei denen die Materialstärke der Wand und die Materialstärke des Übergangs zwischen Boden und Wand gleich ist, während die Materialstärke des Bodens geringer ausgeführt ist.

Der Erfindung liegt daher die Aufgabe zugrunde, einen Becher bzw. eine Kapsel vorzuschlagen, welche die genannten Probleme nicht aufweisen, formstabil und leicht durchstoßbar sind.

Diese Aufgabe wird erfindungsgemäß dadurch gelöst, daß die Tiefziehkontur eine vorgegebene Materialverteilung sicherstellt.

Damit werden unerwünschte Dünn- oder Dickstellen vermieden und die einzelnen Abschnitte weisen die vorgesehenen Wandstärken auf.

Erfindungsgemäss ist am Übergang zwischen Boden und Wand eine konstruktive Verstärkung vorgesehen.

Hierdurch wird der Boden und bei entsprechender Ausgestaltung auch die Wand stabilisiert und ein unerwünschtes Einknicken bzw. Eindrücken bei Belastung vermieden.

Erfindungsgemäss weist der Übergang zwischen Boden und Wand eine größere Materialstärke als Boden und Wand auf.

Hierdurch wird der Übergang sehr stabil und verhindert vor allem ein Hineindrücken des Bodens bei Belastung zum Beispiel beim Durchstoßen in einer Kaffeemaschine. Zudem wird das Kollabieren der Seitenwand vermieden.

Äußerst vorteilhaft ist es auch, wenn das Verhältnis der Materialdicke im Bereich des Bodens und des Übergangsbereiches zwischen Boden und Wand 1,0 zu größer als 0,75, vorzugsweise 1,0 zu größer als 0,875 ist.

Bei einem solchen Dickenverhältnis ist der Übergangsbereich so massiv, daß dieser als stabilisierender Ring wirkt.

Weiterhin ist es erfindungsgemäß äußerst vorteilhaft, wenn am Übergang zwischen Boden und Wand ein Standring vorgesehen ist.

Hierdurch wird der Becher bzw. die Kapsel konstruktiv versteift. Ebenso wie durch den mit mehr Material versehenen Übergang wird somit ein Einbeulen des Bodens beim Durchstoßen des Bodens verhindert. Unter Umständen kann auch die Wand durch diesen aufgespannten, stabilen Ring versteift werden.

Eine weitere Fortbildung der Erfindung ist darin zu sehen, daß ein abgerundeter Übergang zwischen Boden und Wand vorgesehen ist.

Hierdurch wird der Becher nochmals verbessert. Die Wandstärken werden gleichmäßiger. In der Rundung kann mehr Material vorgesehen werden, ohne dass dies optisch auffällt.

Gemäß einer weiteren Fortbildung der Erfindung ist es auch sehr vorteilhaft, wenn am Übergang zwischen Boden und Wand eine oder mehrere Sicken vorgesehen sind.

Ebenso ist es erfindungsgemäß sehr vorteilhaft, wenn am Übergang zwischen Boden und Wand Rippen und/oder diskrete Konturen angeordnet sind.

Durch beide Maßnahmen wird der Übergang verstärkt und damit steif, ohne einen weiteren Materialbedarf zu bedingen. Der gesamte Becher wird damit stabilisiert und ist auch bei mechanischer Belastung formstabil.

Weiterhin hat es sich als sehr vorteilhaft erwiesen, wenn im Bereich der Wand Rippen und/oder diskrete Konturen angeordnet sind.

Damit wird der Wandbereich konstruktiv verstärkt.

Es hat sich erfindungsgemäß auch als sehr vorteilhaft erwiesen, wenn die Wandstärke über die Höhe der Wand variiert.

Hierdurch wird Material eingespart, aber dennoch an den kritischen Stellen eine ausreichende Stabilität sichergestellt. Bei einer Wand eines 45mm hohen Bechers (vom Boden aus gemessen), die nicht durch zusätzliche Verstärkungselemente versteift ist, hat sich beispielsweise eine Dicke von 380µm, abfallend auf etwa 260µm bei 5mm Höhe, weiter abfallend auf 200µm bei 20mm Höhe und wieder ansteigend auf etwa 350µm bei einer Höhe von 40mm, das heisst direkt am Stapelrand als sehr gut geeignet erwiesen. Andere Dickenverteilungen sind denkbar. Eine solche Wand ist hinreichend stabil um ein Kollabieren der Wand bei Belastung zu vermeiden. Bei anderen Becherhöhen ergeben sich andere Höhenangaben hinsichtlich der Verteilungen.

Eine weitere sehr vorteilhafte Ausgestaltung liegt vor, wenn der Becher an seiner Öffnung einen umlaufenden Rand aufweist.

Hierdurch wird der Becher einerseits stabilisiert und andererseits ein besonders leichtes Handling ermöglicht.

Dabei hat es sich als sehr vorteilhaft erwiesen, wenn im Bereich des Überganges zwischen Wand und Rand Verstärkungselemente, d.h. Sicken, Rippen und/oder diskrete Konturen vorgesehen sind.

Damit wird auch der Übergang zwischen Wand und Rand konstruktiv versteift.

Sehr vorteilhaft ist es auch, wenn der Becher eine Stapelkante aufweist.

Hierdurch lassen sich leere, gestapelte Becher bzw. Kapseln besonders leicht entstapeln.

Gemäß einer weiteren sehr vorteilhaften Ausgestaltung der Erfindung ist der Boden des Bechers zumindest im zu durchstoßenden Bereich hinsichtlich seiner Materialdicke kalibriert, d.h. wenigstens annähernd konstant.

Damit weist der Boden in diesem Bereich gleichmäßige mechanische Eigenschaften auf. Das Durchstoßen wird erleichtert.

Sehr vorteilhaft ist es erfindungsgemäß, wenn der Boden des Bechers bzw. der Kapsel eine Verstärkung aufweist, die vorzugsweise in der Mitte des Bodens angeordnet ist.

Hiermit wird der Boden nochmals stabilisiert.

Dabei hat es sich als besonders vorteilhaft erwiesen, wenn der Boden des Bechers eine vorzugsweise nach oben, das heisst in Richtung zur Becheröffnung gerichtete Erhebung aufweist.

Die Erhebung stabilisiert und verstärkt den Boden und kann dabei im Verhältnis viel Material aufnehmen. Dadurch wird es auch möglich bei gleichbleibender Stabilität die Materialstärke im umliegenden Boden zu verringern. Zudem kann bei einer entsprechend hohen Erhebung diese als Abstandhalter für ein auf der Erhebung aufliegendes Papierfilter zum Boden dienen und so dafür sorgen, daß die Nadeln beim Durchstoßen des Bodens das Filter nicht berühren.

Sehr vorteilhaft ist es dabei erfindungsgemäß, wenn die Erhebung gerundet, kugelabschnittförmig, kegelstumpfförmig oder eckig ausgebildet ist.

Mit diesen Formen wurden beste Ergebnisse erzielt.

Gemäß einer weiteren Ausgestaltung der Erfindung ist es sehr vorteilhaft, wenn der außen um die Verstärkung herum vorgesehene Boden eben ausgebildet ist.

Dieser ebene Bereich ist nicht nur eben, sondern kann auch von gleichmäßiger Materialdicke sein, so daß dieser gleichmäßige Eigenschaften hinsichtlich Durchstoßbarkeit und Festigkeit aufweist.

Weiterhin hat es sich erfindungsgemäß als sehr vorteilhaft erwiesen, wenn der Boden eine aufgeraute Oberfläche aufweist.

Hierdurch lässt sich insbesondere die Durchstoßkraft noch besser einstellen. Die aufgeraute Oberfläche lässt sich beispielsweise durch eine entsprechend gestaltete, d.h. aufgeraute Tiefziehform erreichen, die beispielsweise mit einer Lasergravur versehen ist. Ebenso denkbar ist, daß weitere Bereiche des Bechers zusätzlich oder alternativ mit einer aufgerauten Oberfläche versehen sind.

Gemäß einer weiteren Ausgestaltung der Erfindung ist es besonders vorteilhaft, wenn der Becherboden insgesamt oder im Bereich um die Verstärkung herum definiert durchstoßbar ist.

Hier kann der Becher bzw. die Kapsel beispielsweise von Nadeln durchstoßen werden. Bei Einsatz als Brühkapsel in Kaffeemaschinen kann so ein ordnungsgemäßer Brühvorgang sichergestellt werden.

Weiterhin ist es erfindungsgemäß sehr vorteilhaft, wenn der Becherboden insgesamt oder im Bereich um die Verstärkung herum eine Dicke von max 500µm, vorzugsweise von etwa 320 bis 420 µm mit einer Abweichung von maximal 50µm aufweist.

Diese Dicke stellt einerseits eine hinreichende Stabilität und zudem eine gute Durchstoßbarkeit sicher. Durch die geringe Abweichung ist dies über die gesamte Fläche sichergestellt.

Erfindungsgemäß sehr vorteilhaft ist es auch, wenn der Becher im Wesentlichen aus PET, PET gefüllt, d.h. mit mineralischen Füllstoffen versehen, PET geschäumt, PP, PP gefüllt, d.h. mit mineralischen Füllstoffen versehen, und/oder PP geschäumt hergestellt ist und Barriereschichten aufweisen kann.

Diese Materialien haben sich als besonders vorteilhaft erwiesen. Hierdurch wird ein Weg weg vom gebräuchlichen **PS** eröffnet. Barriereschichten sorgen für eine gute Lagerfähigkeit von befüllten Bechern bzw. Kapseln.

Dabei ist es sehr vorteilhaft, wenn das Bechermaterial bei allen **PP** Varianten eine Dichte kleiner 1 und bei allen PET Varianten eine Dichte größer 1 aufweist.

Durch das Einhalten dieser Dichten kann der Becher bzw. die Kapsel sehr gut von anderem Abfall getrennt werden und lässt sich so sehr gut dem Recycling zuführen.

Eine Vorrichtung zur Herstellung eines erfindungsgemäßen Bechers liegt vor, wenn bei der Herstellung ein Vorstrecker vorgesehen ist, der als Stempel ausgebildet ist.

Mit diesem Vorstrecker kann die Materialverteilung im Tiefziehprozess und damit im resultierenden tiefgezogenen Becher beeinflusst werden.

Dabei hat es sich als sehr vorteilhaft erwiesen, wenn der Vorstrecker im Wandbereich, vorzugsweise im unteren Bereich der Seitenwand, einen Rücksprung aufweist.

Durch die Verwendung eines solchen speziell geformten Vorstreckers wird sichergestellt, dass beim Tiefziehen im späteren Eckbereich des Bechers die gewünschte und erforderliche Materialmenge vorhanden ist.

Des Weiteren hat es sich als sehr vorteilhaft erwiesen, wenn der Vorstrecker mehrteilig ausgebildet ist.

Dadurch lässt sich die Materialverteilung noch besser beeinflussen.

Sehr vorteilhaft ist es dabei, wenn der Vorstrecker aus einem Innenteil und aus einem Außenteil besteht.

Durch den Aufbau des Vorstreckers mit einem Innenteil und einem Außenteil wird es beim Tiefziehvorgang ermöglicht, daß der Innenteil dem äußeren Stempel (Außenteil) vorgelagert ist, und so die Materialverdickung im Bereich des Bodens gebildet wird. Der restliche Boden kann dadurch stärker gestreckt und dünner ausgebildet werden.

Eine weitere sehr vorteilhafte Ausgestaltung liegt vor, wenn der Vorstrecker eine Kalibrierfläche zur Kalibierung des Bodens aufweist.

Hiermit kann die Abweichung der Dicke des Bodens nochmals verringert werden. Die genaue Ausgestaltung des Vorstreckers für die Kalibrierung und die Durchführung des Kalibrierverfahrens ist einem gesonderten Schutzrecht vorbehalten.

Im folgenden ist die Erfindung anhand zweier Ausführungsbeispiele näher dargestellt.

Dabei zeigen:
- Fig. 1: ein Schaubild einer ersten Variante des erfindungsgemäßen Bechers mit Boden, Seitenwand, Rand und Stapelkante,
- Fig. 2: ein Schaubild desselben Bechers von unten gesehen,

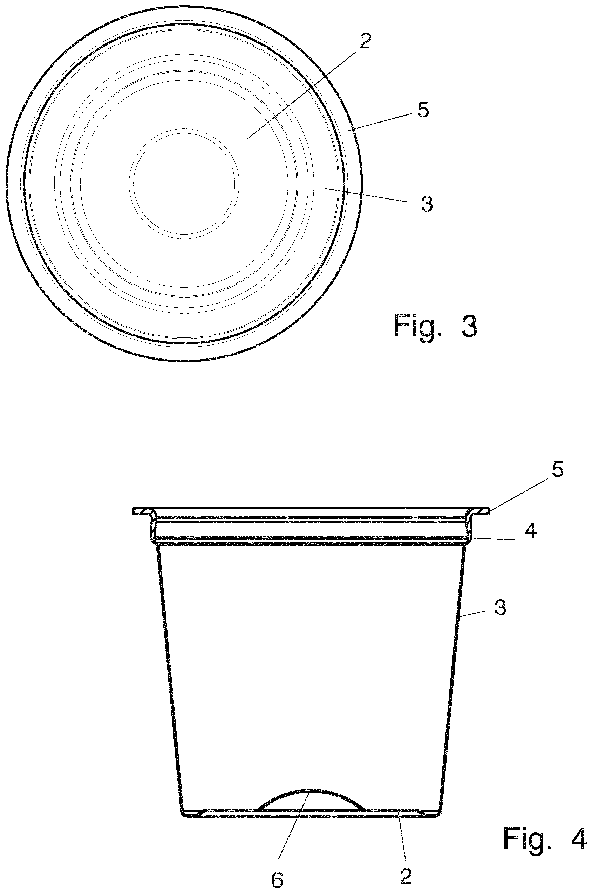

- Fig. 3: eine Draufsicht auf den Boden des Bechers,
- Fig. 4: einen vertikalen Schnitt durch den Becher,

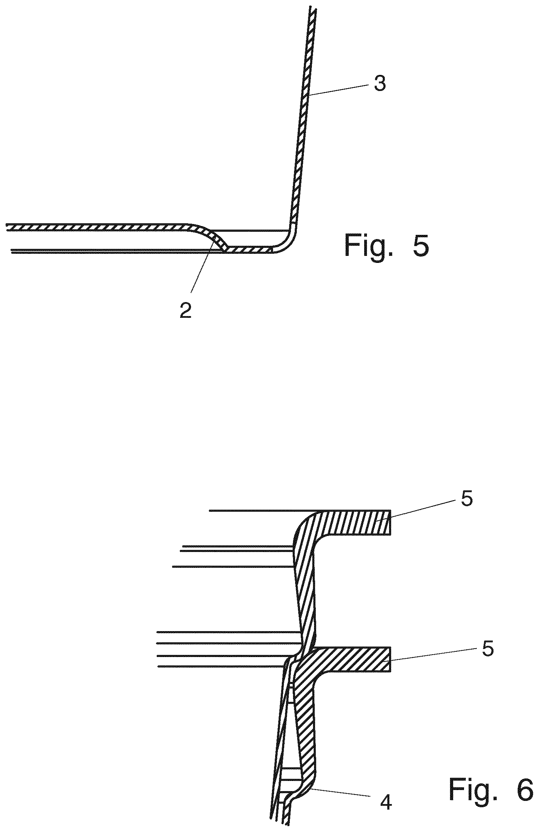

- Fig. 5: einen Schnitt durch den Übergang zwischen Boden und Seitenwand des Bechers,
- Fig. 6: einen Schnitt durch den Rand und die Stapelkante des Bechers, wobei die Funktion der Stapelkante dargestellt ist,

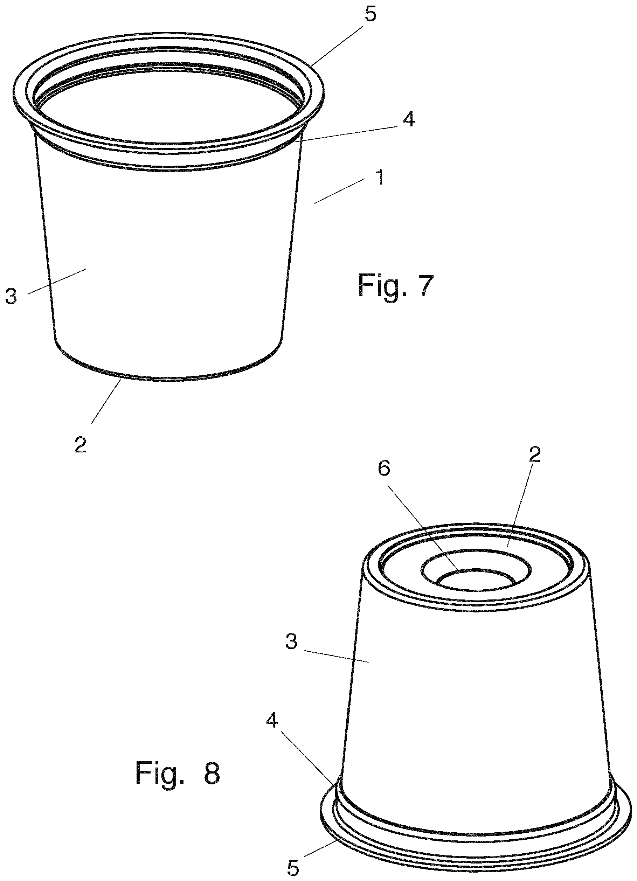

- Fig. 7: ein Schaubild einer zweiten Variante des erfindungsgemäßen Bechers mit Boden, Seitenwand, Rand und Stapelkante,
- Fig. 8: ein Schaubild desselben Bechers von unten gesehen,

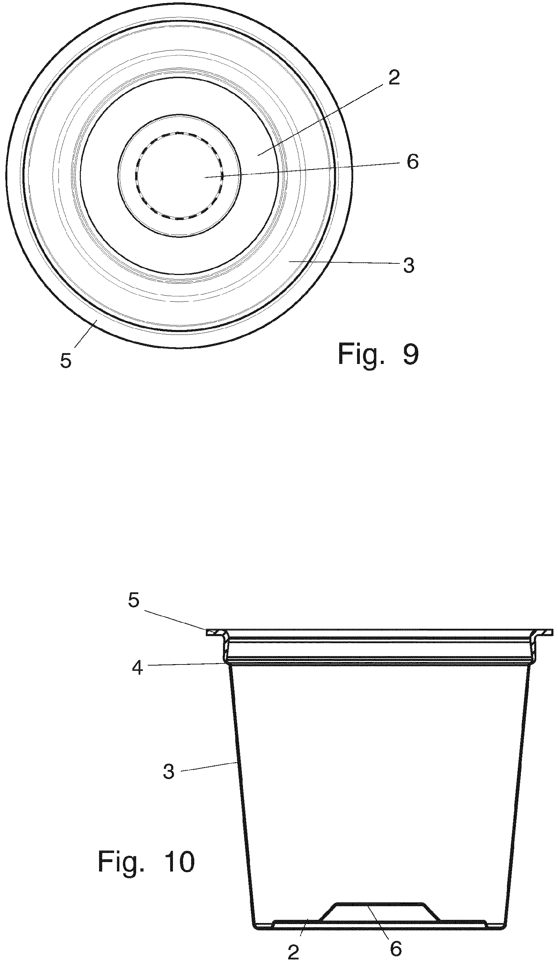

- Fig. 9: eine Draufsicht auf den Boden des Bechers,
- Fig. 10: einen vertikalen Schnitt durch den Becher,

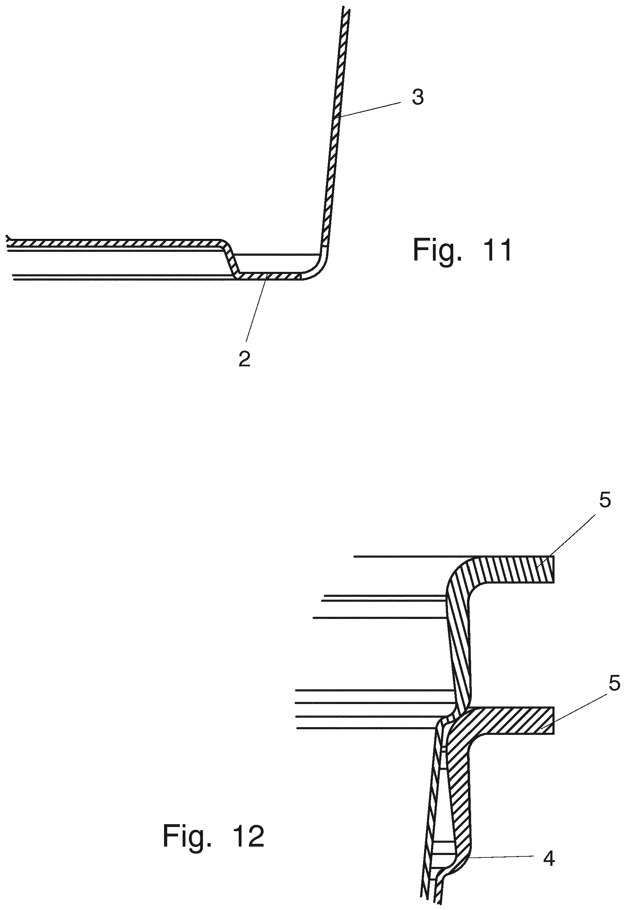

- Fig. 11: einen Schnitt durch den Übergang zwischen Boden und Seitenwand des Bechers,
- Fig. 12: einen Schnitt durch den Rand und die Stapelkante des Bechers, wobei die Funktion der Stapelkante dargestellt ist, und
- Fig. 13: eine schematische Darstellung einer Tiefzieheinrichtung mit einem Vorstrecker in verschiedenen Stadien des Tiefziehprozesses.

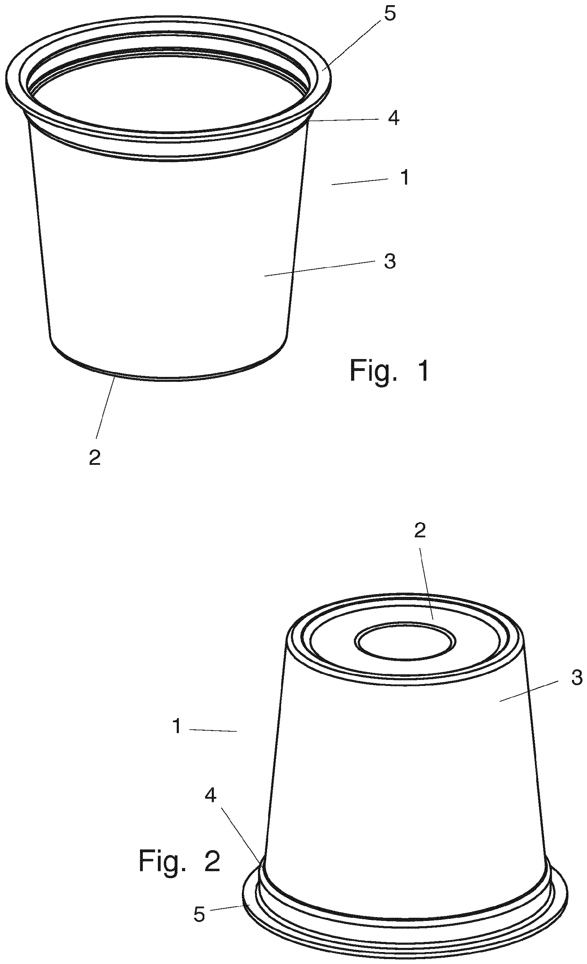

Mit 1 ist in Fig. 1 ein Becher mit einem Boden 2 und einer daran anschließenden und den Boden 2 umgebenden Seitenwand 3 bezeichnet. Am vom Boden 2 abgewandten Ende der Seitenwand 3 ist eine nach außen ragende Stapelkante 4 und ein daran anschließender, nach außen gerichteter Rand 5 vorgesehen.

Die Seitenwand 3 ist vom Boden 2 ausgehend geringfügig nach außen geneigt, wobei sich Neigungswinkel im einstelligen Gradbereich, bevorzugt um die fünf Grad als besonders praktikabel erwiesen haben.

Die Stapelkante 4 ragt geringfügig über den Wanddurchmesser der Seitenwand 3 an dieser Stelle nach außen und ist Teil der Seitenwand 3. Stapelkanten 4 im Bereich von ein bis zwei Millimeter haben sich als ausreichend erwiesen, können aber beispielsweise je nach Größe des Bechers bzw. der Kapsel variieren.

An die Stapelkante 4 schließt sich der Rand 5 an, der als waagerechter Flansch ausgebildet sein kann. Randbreiten von drei bis vier Millimetern reichen oftmals um eine nicht dargestellte Deckelfolie ausreichend dicht auf den Rand 5 aufsiegeln zu können.

Am Übergang zwischen Boden 2 und Wand 3 ist in diesem Ausführungsbeispiel ein Radius vorgesehen, der konstruktive Stabilität erzeugt.

Zusätzlich ist in diesem Ausführungsbeispiel viel Material in diesem Übergang vorgesehen, so daß der Übergang auch durch das zusätzliche Material versteift ist. Die Wandstärke des Übergangs ist dabei größer als diejenige von Boden und Wand. Der Übergang bildet einen Ring, der den Boden aufspannt und so stabilisiert und gegenüber mechanischen Belastungen unempfindlich macht. Zudem wird durch diesen Ring ein Kollabieren der Seitenwand bei Belastung vermieden.

Es ist aber auch denkbar, daß Sicken, Wülste oder auch diskrete Konturen vorgesehen sind, die durch ihre dreidimensionale Ausgestaltung nicht nur den Übergang zwischen Boden 2 und Wand 3, sondern auch den Boden 2 und die Wand 3 versteifen.

Zusätzlich oder alternativ können im Boden 2 und/oder in der Wand 3 weitere Verstärkungselemente wie Rippen, Sicken oder diskrete Konturen angeordnet sein.

Ebenso sind Verstärkungselemente zwischen der Wand 3 und dem Randflansch 5 denkbar. Diese können dabei auch die Stapelkante 4 erfassen oder durch diese hindurch reichen.

Es ist denkbar, daß, wie in diesem Ausführungsbeispiel dargestellt, in der Mitte des Bodens 2 ist eine Erhebung 6 vorgesehen ist, die hier kugelabschnittförmig ausgebildet ist. Andere Formen sind denkbar.

Diese Erhebung 6 stabilisiert den Boden.

Der Boden 2 entspricht dabei den vorgegebenen Anforderungen zum Beispiel hinsichtlich Stabilität, Durchstoßverhalten oder dergleichen.

Wenn die Erhebung 6 noch mit vergleichsweise viel Material versehen ist, kann dies besonders leicht sichergestellt werden.

Zudem kann bei einer entsprechend hohen Erhebung diese als Abstandhalter für ein auf der Erhebung aufliegendes Papierfilter zum Boden dienen und so dafür sorgen, daß die Nadeln beim Durchstoßen des Bodens das Filter nicht berühren.

Der Boden 2 kann bei seiner Herstellung noch durch eine besondere Vorrichtung, deren Details und Anwendung nicht Gegenstand dieses Schutzrechtes ist, kalibriert werden, so daß der Boden 2 über seine gesamte Fläche, ausgenommen die Erhebung 6, eine gleichmäßige Dicke und gleichmäßige Eigenschaften aufweist.

Teil der besonderen Vorrichtung ist ein als Stempel ausgebildeter Vorstrecker, der nicht nur die Materialverteilung im Becher beeinflusst und sicherstellt, sondern auch zum Kalibrieren des Bodens genutzt werden kann.

So eignet sich der Becher 1 unter anderem auch für Kaffeekapseln oder dergleichen bei denen der Boden 2 bei der Zubereitung des Kaffees in einer Maschine durchstochen wird. Es kann sichergestellt werden, daß der Boden 2 dabei weder bricht noch zu schwer oder gar nicht durchstochen werden kann. Die Performance des Bechers 1 ist dabei gleichmäßig innerhalb der erwünschten Spezifikationen. Andere Anwendungen sind denkbar.

Zusätzlich kann der Boden 2 noch aufgerauht oder mit einer Struktur versehen sein. Dies kann beispielsweise durch ein Insert in der Tiefziehvorrichtung eingebracht werden, welches selbst strukturiert ist. Besonders gut geeignet sind dabei Inserts, die mit einer Lasergravur versehen sind. Ebenso kann der Vorstrecker entsprechend strukturiert sein und bei der Kalibration die Aufrauhung bzw. Struktur erzeugen.

Eine besonders gute Durchstoßbarkeit des Bodens 2 in Verbidnung mit der gewünschten Stabilität wird erreicht, wenn der Boden 2 zumindest in seinem Bereich um die Erhebung 6 herum, eine Dicke von maximal 500µm, vorzugsweise etwa zwischen 320 und 420 µm aufweist. Eine geringe Abweichung von maximal 50µm ist hierbei besonders zweckdienlich.

Besonders in Kombination mit einer Aufrauhung wird damit eine hervorragende und gleichbleibende Durchstoßbarkeit des Bodens 2 gewährleistet. Zudem wird durch den Ring am Übergang zwischen Boden 2 und Wand 3 ein Verbiegen und Durchdrücken des Bodens 2 beim Durchstoßen vermieden. Der Becher 1 wird dabei auch nicht zusammengezogen.

Um die erwünschte Stabilität des Bechers 1 zu erzielen, hat es sich als besonders vorteilhaft herausgestellt, wenn das Verhältnis der Materialdicke im Bodens 2 und des Übergangsbereiches zwischen Boden 2 und Wand 3 1,0 zu größer als 0,75, vorzugsweise 1,0 zu größer als 0,875 ist. Das bedeutet der Übergangsbereich weist im wesentlichen eine annähernd identische oder gar größere Materialdicke wie der Boden 2 auf.

Damit wird die erwünschte Formstabilität beim Entleeren der Kapsel bzw. beim Erzeugen eines gewünschten Heißgetränkes erreicht und sichergestellt. Zudem wird die Seitenwand vor einem unerwünschten Kollabieren bei mechanischer Belastung geschützt.

Die Materialstärke der Wand 3 kann über deren Höhe variieren.

Hierdurch wird Material eingespart, aber dennoch an den kritischen Stellen eine ausreichende Stabilität sichergestellt. Bei einer Wand 3 eines 45mm hohen Bechers (vom Boden aus gemessen), die nicht durch zusätzliche Verstärkungselemente versteift ist, hat sich beispielsweise eine Dicke von 380µm, abfallend auf etwa 260µm bei 5mm Höhe, weiter abfallend auf 200µm bei 20mm Höhe und wieder ansteigend auf etwa 350µm bei einer Höhe von 40mm, das heisst direkt am Stapelrand 4 als sehr gut geeignet erwiesen. Andere Dickenverteilungen sind denkbar. Eine solche Wand 3 ist hinreichend stabil um ein Kollabieren der Wand bei Belastung, beispielsweise beim Durchstechen des Bodens oder auch bei einem Brühvorgang zu vermeiden. Bei anderen Becherhöhen ergeben sich andere Höhenangaben hinsichtlich der Verteilungen.

Der Becher 1 ist aus PET, PET gefüllt, d.h. mit mineralischen Füllstoffen versehen, PET geschäumt, PP, PP gefüllt, d.h. mit mineralischen Füllstoffen versehen, und/oder PP geschäumt hergestellt, wobei die Dichte des Bechermaterials bei allen PP Varianten vorzugsweise kleiner 1 und bei allen PET Varianten größer 1 ist. Durch diese Dichten kann der Becher kann beispielsweise in einem Wasserbad von Getränkerückständen, wie beispielsweise Kaffeesatz getrennt und auch von anderen Kunststoffen getrennt und so einem sortenreinen Recycling zugeführt werden. Zudem wird die Stabilität durch den Einsatz dieser Materialien in Verbindung mit den konstruktiven Stabilisierungsmerkmalen sichergestellt. Auf den Einsatz von PS oder anderen Kunststoffen, die teilweise keine gute Umweltbilanz haben, kann verzichtet werden. Zudem wird insgesamt der Materialeinsatz verringert.

Zur Herstellung wird eine Kunststofffolie oder ein Folienabschnitt tiefgezogen. Dabei kann ein als Stempel ausgebildeter Vorstrecker zum Einsatz kommen, der im Wandbereich mit einem Rücksprung versehen ist. Der Rücksprung ist vorzugsweise im unteren Bereich der Seitenwand angeordnet.

Durch die Verwendung eines solchen speziell geformten Vorstreckers wird sichergestellt, daß beim Tiefziehen im späteren Eckbereich des Bechers die gewünschte und erforderliche Materialmenge vorhanden ist.

Bei einem mehrteilig ausgebildeten Vorstrecker lässt sich die Materialverteilung noch besser beeinflussen.

Dabei kann der Vorstrecker aus einem Innenteil und aus einem Außenteil bestehen.

Durch den Aufbau des Vorstreckers mit einem Innenteil und einem Außenteil wird es beim Tiefziehvorgang ermöglicht, daß der Innenteil dem äußeren Stempel (Außenteil) vorgelagert ist, und so die Materialverdickung im Bereich des Bodens gebildet wird. Der restliche Boden kann dadurch stärker gestreckt und dünner ausgebildet werden.

Durch beide Ausgestaltungen kann die Materialverteilung innerhalb des tiefgezogenen Bechers 1 noch besser kontrolliert und vorgegeben werden. Unerwünschte Dünn- oder Dickstellen werden vermieden.

Zudem wird es möglich, den Vorstrecker auch zum Kalibrieren des Bodens 2 einzusetzen und/oder eine Aufrauhung des Bodens zu erzeugen.

Hierzu weist der Vorstrecker eine Kalibrierfläche zur Kalibierung des Bodens auf.

Die Abweichung der Dicke des Bodens kann damit nochmals verringert werden. Die genaue Ausgestaltung des Vorstreckers für die Kalibrierung und die Durchführung des Kalibrierverfahrens ist einem gesonderten Schutzrecht vorbehalten.

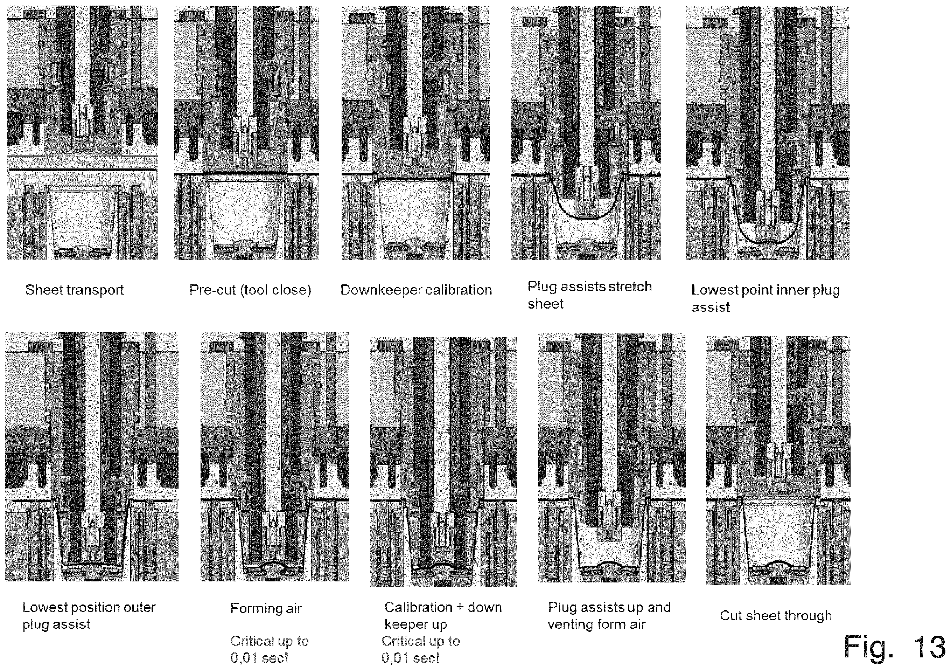

In Fig. 13 ist eine schematische Abfolge des Tiefziehprozesses dargestellt. Zunächst wird eine flachliegende Folie zwischen Tiefziehform und darüber angeordnetem Vorstrecker eingebracht.

Anschließend fährt ein Niederhalter und Stanze vom Vorstrecker herab gegen die Tiefziehform und klemmt die Folie fest und schneidet diese an der Außenkontur ab.

Nun wird der Vorstrecker mit vorgelagertem Innenteil in die Tiefziehform herabgefahren. Das Innenteil trifft auf die tiefzuziehende Folie und kühlt diese in diesem Bereich ab. Dieser Bereich bildet die spätere Verstärkung 6 im Boden 2.

Der Vorstrecker fährt dabei soweit in die Tiefziehform ein, daß der Innenteil auf die entsprechende Kontur der Tiefziehform trifft.

Nun fährt das Außenteil weiter ein, bis dieses etwa gleichauf mit dem Innenteil liegt.

Jetzt wird die bereits in die Form hineingedrückte Folie mittels Unterdruck oder Überdruck geformt, so daß sich diese an die Tiefziehform anlegt.

Danach wird die Kalibrierfläche mit dem Boden des gebildeten Bechers in Kontakt gebracht. Der Boden wird zwischen Kalibrierfläche des Stempels und Tiefziehform kalibriert.

Nun wird der Vorstrecker wieder aus der Tiefziehform herausgezogen und anschließend der Becherrand vollständig besäumt.

Nach der Entformung kann der Prozess von vorne gestartet werden.

## Patentansprüche

1. Aus einer Kunststofffolie oder einem Kunststoffzuschnitt tiefgezogener Becher (1) bzw. Kapsel mit einem Boden (2) und einer umlaufenden Wand (3), **dadurch gekennzeichnet, daß** die Tiefziehkontur eine vorgegebene Materialverteilung sicherstellt, wobei am Übergang zwischen Boden (2) und Wand (3) eine konstruktive Verstärkung vorgesehen ist, wobei der Übergang zwischen Boden (2) und Wand (3) eine größere Materialstärke aufweist wie der Boden (2) und der Übergang zwischen Boden (2) und Wand (3) eine größere Materialstärke aufweist wie die Wand (3).

2. Becher nach Anspruch 1, **dadurch gekennzeichnet, daß** das Verhältnis der Materialdicke im Bereich des Bodens (2) und des Übergangsbereiches zwischen Boden (2) und Wand (3) 1,0 zu größer als 0,75, vorzugsweise 1,0 zu größer als 0,875 sein kann.

3. Becher nach einem der vorangehenden Ansprüche, **dadurch gekennzeichnet, daß** am Übergang zwischen Boden (2) und Wand (3) ein Standring vorgesehen ist.

4. Becher nach einem der vorangehenden Ansprüche, **dadurch gekennzeichnet, daß** ein abgerundeter Übergang zwischen Boden (2) und Wand (3) vorgesehen ist.

5. Becher nach einem der vorangehenden Ansprüche, **dadurch gekennzeichnet, daß** am Übergang zwischen Boden (2) und Wand (3) eine oder mehrere Sicken vorgesehen sind.

6. Becher nach einem der vorangehenden Ansprüche, **dadurch gekennzeichnet, daß** am Übergang zwischen Boden (2) und Wand (3) Rippen und/oder diskrete Konturen angeordnet sind und/oder daß im Bereich der Wand (3) Rippen und/oder diskrete Konturen angeordnet sind.

7. Becher nach einem dervorangehenden Ansprüche, **dadurch gekennzeichnet, daß** die Wandstärke über die Höhe der Wand (3) variiert.

8. Becher nach einem der vorangehenden Ansprüche, **dadurch gekennzeichnet, daß** der Becher (1) an seiner Öffnung einen umlaufenden, ebenen Rand (5) aufweist, wobei im Bereich des Überganges zwischen Wand (3) und Rand (5) Verstärkungselemente, d.h. Sicken, Rippen und/oder diskrete Konturen vorgesehen sein können.

9. Becher nach einem der vorangehenden Ansprüche, **dadurch gekennzeichnet, daß** der Becher (1) eine Stapelkante (4) aufweist.

10. Becher nach einem der vorangehenden Ansprüche, **dadurch gekennzeichnet, daß** der Boden (2) des Bechers (1) zumindest im zu durchstoßenden Bereich hinsichtlich seiner Materialdicke kalibriert ist, d.h. wenigstens annähernd konstant ist.

11. Becher nach einem der vorangehenden Ansprüche, **dadurch gekennzeichnet, daß** der Boden (2) des Bechers (1) bzw. der Kapsel eine Verstärkung aufweist, die vorzugsweise in der Mitte des Bodens angeordnet ist, wobei der Boden (2) des Bechers (1) eine vorzugsweise nach oben, das heisst in Richtung zur Becheröffnung gerichtete Erhebung (6) aufweisen kann, wobei die Erhebung (6) gerundet, kugelabschnittförmig, kegelstumpfförmig oder eckig ausgebildet sein kann und wobei der außen um die Verstärkung herum vorgesehene Boden (2) eben ausgebildet sein kann.

12. Becher nach einem der vorangehenden Ansprüche, **dadurch gekennzeichnet, daß** der Boden (2) eine aufgeraute Oberfläche aufweist.

13. Becher nach einem der vorangehenden Ansprüche, **dadurch gekennzeichnet, daß** der Becherboden (2) insgesamt oder im Bereich um die Verstärkung herum definiert durchstoßbar ist.

14. Becher nach einem der vorangehenden Ansprüche, **dadurch gekennzeichnet, daß** der Becherboden (2) insgesamt oder im Bereich um die Verstärkung herum eine Dicke von max 500µm, vorzugsweise von etwa 320 bis 420 µm mit einer Abweichung von maximal 50µm aufweist.

15. Becher nach einem der vorangehenden Ansprüche, **dadurch gekennzeichnet, daß** der Becher (1) im Wesentlichen aus PET, PET gefüllt, d.h. mit mineralischen Füllstoffen versehen, PET geschäumt, **PP, PP** gefüllt, d.h. mit mineralischen Füllstoffen versehen, und/oder **PP** geschäumt hergestellt ist und Barriereschichten aufweisen kann, wobei das Bechermaterial bei allen **PP** Varianten eine Dichte kleiner 1 und bei allen PET Varianten eine Dichte größer 1 aufweisen kann.

## Claims

1. A beaker (1) / capsule deep-drawn from a plastic foil or a plastic blank with a bottom (2) and a surrounding wall (3), **characterised in that** the deep-drawn contour ensures a predefined material distribution, wherein a constructive reinforcement is provided at the transition between the bottom (2) and the wall (3), wherein the transition between the bottom (2) and the wall (3) comprises a greater material thickness than the bottom (2) and the transition between the bottom (2) and the wall (3) comprises a greater material thickness than the wall (3).

2. The beaker according to claim 1, **characterised in that** the ratio between the material thickness in the region of the bottom (2) and in the transition region between bottom (2) and wall (3) may be 1.0 to greater than 0.75, preferably 1.0 to greater than 0.875.

3. The beaker according to one of the preceding claims, **characterised in that** a standing ring is provided at the transition between bottom (2) and wall (3).

4. The beaker according to one of the preceding claims, **characterised in that** a rounded-off transition is provided between bottom (2) and wall (3).

5. The beaker according to one of the preceding claims, **characterised in that** one or more beads are provided at the transition between bottom (2) and wall (3).

6. The beaker according to one of the preceding claims, **characterised in that** ribs and/or discrete contours are arranged at the transition between bottom (2) and wall (3) and/or that ribs and/or discrete contours are arranged in the region of the wall (3).

7. The beaker according to one of the preceding claims, **characterised in that** the wall thickness varies across the height of the wall (3).

8. The beaker according to one of the preceding claims, **characterised in that** the beaker (1) at its opening comprises a surrounding plane rim (5), wherein in the region of the transition between wall (3) and rim (5) reinforcement elements, i.e. beads, ribs and/or discrete contours may be provided.

9. The beaker according to one of the preceding claims, **characterised in that** the beaker (1) comprises a stacking edge (4).

10. The beaker according to one of the preceding claims, **characterised in that** the bottom (2) of the beaker (1) is calibrated at least in the region to be pierced as regards its material thickness, i.e. is at least approximately constant.

11. The beaker according to one of the preceding claims, **characterised in that** the bottom (2) of the beaker (1) / the capsule comprises a reinforcement, which is preferably arranged in the centre of the bottom, wherein the bottom (2) of the beaker (1) may comprise an elevation (6) which preferably extends in upward direction, i.e. in direction of the beaker opening, wherein the elevation (6) may be designed so as to be rounded, spherical-segment-shaped, truncated-cone-shaped or angular, and wherein the bottom (2) provided externally around the reinforcement may be plane-shaped.

12. The beaker according to one of the preceding claims, **characterised in that** the bottom (2) comprises a roughened surface.

13. The beaker according to one of the preceding claims, **characterised in that** the beaker bottom (2) is defined so as to be piercable altogether or in the region around the reinforcement.

14. The beaker according to one of the preceding claims, **characterised in that** the beaker bottom (2), all-over or in the region around the reinforcement, comprises a thickness of max. 500 µm, preferably of about 320 to 420 µm with a deviation of 50 µm maximum.

15. The beaker according to one of the preceding claims, **characterised in that** the beaker (1) may be produced from PET, PET filled, i.e. provided with mineral fillers, PET foamed, PP, PP filled, i.e. provided with mineral fillers, and/or PP foamed, and may comprise barrier layers, wherein the beaker material may comprise a thickness smaller than 1 in all PP variants and a thickness greater than 1 in all PET variants.

## Revendications

1. Gobelet (1) embouti à partir d'un film en matière plastique ou d'une découpe de matière plastique ou capsule (2) comportant un fond (2) et une paroi périphérique (3), **caractérisé en ce que** le contour d'emboutissage garantit une répartition prédéfinie du matériau, étant prévu, à la transition entre le fond (2) et la paroi (3), un renforcement constructif, la transition entre le fond (2) et la paroi (3) présentant une épaisseur de matériau supérieure à celle du fond (2) et la transition entre le fond (2) et la paroi (3) présentant une épaisseur de matériau supérieure à celle de la paroi (3).

2. Gobelet selon la revendication 1, **caractérisé en ce que** le rapport entre le matériau au niveau du fond (2) et de la zone de transition entre le fond (2) et la paroi (3) peut être de 1,0 à plus de 0,75, de préférence 1,0 à plus de 0,875.

3. Gobelet selon une des revendications précédentes, **caractérisé en ce que**, à la transition entre le fond (2) et la paroi (3), il est prévu un anneau support.

4. Gobelet selon une des revendications précédentes, **caractérisé en ce qu'**une transition arrondie est prévue entre le fond (2) et la paroi (3).

5. Gobelet selon une des revendications précédentes, **caractérisé en ce que**, à la transition entre le fond (2) et la paroi (3), il est prévu un ou plusieurs bourrelets.

6. Gobelet selon une des revendications précédentes, **caractérisé en ce que**, à la transition entre le fond (2) et la paroi (3), des nervures et/ou des contours discrets sont disposés et que, au niveau de la paroi (3), des nervures et/ou des contours discrets sont disposés.

7. Gobelet selon une des revendications précédentes, **caractérisé en ce que** l'épaisseur de paroi varie sur la hauteur de la paroi (3).

8. Gobelet selon une des revendications précédentes, **caractérisé en ce que** le gobelet (1) présente à son ouverture un bord périphérique plan (5), des éléments de renforcement, c'est-à-dire des bourrelets, des nervures et/des contours discrets pouvant être prévus à la transition entre la paroi (3) et le bord (5).

9. Gobelet selon une des revendications précédentes, **caractérisé en ce que** le gobelet (1) présente un rebord d'empilement (4).

10. Gobelet selon une des revendications précédentes, **caractérisé en ce que** le fond (2) du gobelet (1) est calibré dans la zone à emboutir au niveau de son épaisseur de matériau, c'est-à-dire qu'elle est au moins approximativement constante.

11. Gobelet selon une des revendications précédentes, **caractérisé en ce que** le fond (2) du gobelet (1) ou de la capsule présente un renforcement qui est disposé de préférence au centre du fond, le fond (2) du gobelet (1) pouvant présenter un renforcement (6) orienté vers le haut, c'est-à-dire en direction de l'ouverture du gobelet, le rehaussement (6) pouvant avoir une conformation arrondie, en forme de section sphérique, en forme de tronc conique ou angulaire et le fond (2) prévu à l'extérieur autour du renforcement pouvant avoir une conformation plane.

12. Gobelet selon une des revendications précédentes, **caractérisé en ce que** le fond (2) présente une surface rugosifiée.

13. Gobelet selon une des revendications précédentes, **caractérisé en ce que** le fond du gobelet (2) peut être embouti globalement ou de manière définie autour du renforcement.

14. Gobelet selon une des revendications précédentes, **caractérisé en ce que** le fond du gobelet (2) présente, globalement ou dans la zone située autour du renforcement, une épaisseur de 500 µm maxi, de préférence environ 320 à 420 µm avec un écart de 50 µm au maximum.

15. Gobelet selon une des revendications précédentes, **caractérisé en ce que** le gobelet (1) est fabriqué substantiellement à partir de PET, rempli de PET, c'est-à-dire rempli de matières de charges minérales, en mousse de PET, en PP, rempli de PP, c'est-à-dire rempli de matière de charges minérales et/ou en mousse de PP et peut présenter des couches faisant barrière, le matériau du gobelet pouvant présenter dans toutes les variantes de PP une densité inférieure à 1 et dans toutes les variantes de PET une densité supérieure à 1.
